# EUROPEAN PATENT SPECIFICATION

(11) **EP 2 987 881 B1**
(45) Date of publication and mention of the grant of the patent: **27.09.2017**
(21) Application number: 15740284.3
(22) Date of filing: 08.01.2015
(51) Int. Cl.: C22C 21/10, C22F 1/053, B62K 21/18, B21C 23/00, B21K 7/12

(54) **UNDERBRACKET FOR TWO-WHEELED VEHICLE AND THREE-WHEELED VEHICLE, AND PRODUCTION METHOD FOR SAME**
UNTERKONSOLE FÜR ZWEIRAD- UND DREIRADFAHRZEUG UND HERSTELLUNGSVERFAHREN DAFÜR
ARMATURE INFÉRIEURE POUR VÉHICULE À DEUX ROUES ET VÉHICULE À TROIS ROUES ET PROCÉDÉ DE PRODUCTION POUR CETTE DERNIÈRE

(30) Priority: 21.01.2014 JP 2014008503
(43) Date of publication of application: 24.02.2016
(73) Proprietor: UACJ Extrusion Corporation, Tokyo 103-0026 (JP); KYB Corporation, Tokyo 105-6111 (JP)
(72) Inventor: MINODA, Tadashi, Nagoya-shi Aichi 455-8670 (JP); NAKAI, Yasuhiro, Nagoya-shi Aichi 4558670 (JP); KANEKO, Ryuichi, Tokyo 105-6111 (JP); HIRANO, Katsuya, Tokyo 105-6111 (JP); YAMAMOTO, Nobuji, Nagoya-shi Aichi 4600012 (JP)
(74) Representative: Müller-Boré & Partner Patentanwälte PartG mbB
(86) International application number: PCT/JP2015/050346
(87) International publication number: WO 2015/111438

(56) References cited:
- EP-A1- 2 141 253
- JP-A- H1 030 147
- JP-A- H1 171 624
- JP-A- H08 144 031
- JP-A- S55 500 767
- JP-A- S60 180 637
- JP-A- S63 297 180
- JP-A- 2006 316 303
- US-A1- 2013 146 183

## Description

### TECHNICAL FIELD

The present invention relates to an under bracket for a two-wheel vehicle and a three-wheel vehicle, and a method of producing the same, and more particularly to an under bracket advantageously employed for an on-road automotive two-wheel vehicle, and a method of producing the same.

### BACKGROUND ART

In various two-wheel vehicles and three-wheel vehicles, an under bracket (and an upper bracket) is generally employed as a member for connecting a steering shaft and front forks. The under bracket is required to have properties suitable for the type of the two-wheel vehicle or the three-wheel vehicle, for example. In recent years, the under bracket formed of an aluminum alloy (Al alloy) has been widely used for its high rigidity and for its light weight. Further, the under bracket is required to have high toughness, so that many under brackets formed of Al alloys are produced by a forging process.

For instance, the under bracket which is formed of the Al alloy and to be used for the automotive two-wheel vehicle (on-road automotive two-wheel vehicle) that is intended to be used particularly for driving on roads (paved roads) is generally produced by using a 6000-series Al alloy (particularly, a 6061 alloy) in view of a balance between a cost of production of the under bracket and its desired strength. The under bracket is produced by subjecting a cast or extruded body formed of the 6000-series Al alloy to a hot forging process at about 450°C, thereby obtaining a forged article having the desired shape of the intended under bracket, and then subjecting the thus obtained forged article to heat treatments such as a solution treatment, a quenching treatment and an artificial aging treatment.

Described more specifically, in production of the under bracket using the cast body or the like formed of the 6000-series Al alloy, the forged article obtained by the hot forging process is generally subjected to the solution treatment at a temperature not lower than 500°C, and then subjected to the quenching treatment by rapidly cooling the forged article from the high temperature not lower than 500°C to the room temperature. However, in the quenching treatment, deformation (quenching strain) of the forged article takes place due to the rapid cooling of the forged article from the high temperature not lower than 500°C, so that a process for correcting the strain of the forged article is required to be practiced after the quenching treatment, resulting in an increase of the cost of the conventional production of the under bracket using the 6000-series Al alloy. Further, the solution treatment is conducted at a temperature higher than that of the hot forging process, so that the end product suffers from partial coarsening of crystal grains due to recrystallization, giving rise to a risk of deterioration of strength of the product and reduction of resistance of the product to stress-corrosion-cracking (hereinafter referred to as "SCC resistance"). Therefore, in the production of the under bracket using the Al alloy, reduction of the quenching strain is required to eliminate the need to practice the strain correcting process, and reduction of the recrystallization is required to prevent the deterioration of the strength and the reduction of the SCC resistance of the end product.

Under the above-described circumstances, Patent Document 1 (JP-A-2006-316303) proposes: an extruded aluminum alloy body to be subjected to a high-temperature-forming process, which is obtained by subjecting an ingot of an aluminum alloy having a specific alloy composition to an extrusion process, and which includes a recrystallized surface layer having a thickness not larger than 300µm; and a high-temperature-formed article obtained by forming the above-described extruded body under predetermined conditions.

However, although the extruded body proposed in Patent Document 1 is suitable for a forming process conducted at a temperature of 350-500°C and at a strain rate within a range of 10⁻²-10⁰ (s⁻¹), the strain rate during the hot forging process often exceeds 10⁰(s⁻¹), so that even where the under bracket for the two-wheel and three-wheel vehicles is produced by the hot forging process using the extruded body disclosed in Patent Document 1, there is a risk that the under bracket fails to have sufficiently high degrees of the strength and the SCC resistance, due to the form of its structure.

### PRIOR ART DOCUMENT

### PATENT DOCUMENT

Patent Document 1: JP-A-2006-316303

### SUMMARY OF THE INVENTION

### TECHNICAL PROBLEM

The present invention was made in view of the background art described above. It is therefore an object of the invention to provide the under bracket for the two-wheel vehicle and the three-wheel vehicle, which has high degrees of strength and resistance to the stress-corrosion-cracking (SCC resistance). It is another object of the invention to provide a method which permits advantageous production of such an under bracket.

### SOLUTION TO PROBLEM

The above-described object can be achieved according to the invention which provides an under bracket for a two-wheel vehicle and a three-wheel vehicle, which is formed of an Al alloy having an alloy composition comprising 4.0-5.0 mass% Zn, 1.0-2.0 mass% Mg, 0.50 mass% or less (and more than 0 mass%) Cu, 0.20-0.70 mass% Mn, and 0.25 mass% or less (and more than 0 mass%) Zr, with the balance consisting of Al and inevitable impurities, the under bracket having a microstructure in the form of a fibrous structure, and a recrystallized-structure layer formed on its surface with a thickness not larger than 0.5mm.

The above-described under bracket for the two-wheel vehicle and the three-wheel vehicle can be advantageously produced according to the invention which provides a method, comprising the steps of: preparing an extruded Al alloy body by a hot extrusion process practiced at an extrusion temperature not lower than 400°C, by using an Al alloy having an alloy composition comprising 4.0-5.0 mass% Zn, 1.0-2.0 mass% Mg, 0.50 mass% or less (and more than 0 mass%) Cu, 0.20-0.70 mass% Mn, and 0.25 mass% or less (and more than 0 mass%) Zr, with the balance consisting of Al and inevitable impurities, the extruded Al alloy body having a microstructure in the form of a fibrous structure, and a recrystallized-structure layer formed on its surface with a thickness not larger than 0.1 mm; subjecting the extruded Al alloy body to a hot forging process under conditions of: a forging-start temperature which is set within a range of 400-480°C and such that an absolute value of a difference between the forging-start temperature and the extrusion temperature does not exceed 20°C; and a forging-termination temperature not lower than 380°C and not higher than the forging-start temperature, thereby forming the extruded Al alloy body into a forged article having a predetermined configuration; and subsequently to the hot forging process, performing a quenching treatment of the forged article obtained by the hot forging process, by quenching the forged article to 200°C at an average cooling rate not lower than 3°C/s.

### ADVANTAGEOUS EFFECTS OF THE INVENTION

The under bracket for the two-wheel vehicle and the three-wheel vehicle according to the present invention has an excellent strength and an excellent resistance to stress-corrosion-cracking (SCC resistance), since the under bracket is formed of the Al alloy having the specific alloy composition, and has the microstructure in the form of the fibrous structure, and the recrystallized-structure layer formed on its surface with the thickness controlled so as to be not larger than 0.5mm. The under bracket according to the present invention can be suitably used for the on-road automotive two-wheel vehicle, in particular.

The method according to the invention permits advantageous production of the under bracket for the two-wheel vehicle and the three-wheel vehicle described above, and makes it possible to eliminate the need to perform the conventionally required strain correcting process, to effectively reduce the production cost of the under bracket.

### BRIEF DESCRIPTION OF THE DRAWINGS

Fig. 1 is a plan view showing an example of an under bracket for a two-wheel vehicle and a three-wheel vehicle, according to the invention;
Fig. 2 is a back view showing the example of the under bracket for the two-wheel vehicle and the three-wheel vehicle, according to the invention; and
Fig. 3 is a cross sectional view taken along a line I-I in Fig. 1.

### MODE FOR CARRYING OUT THE INVENTION

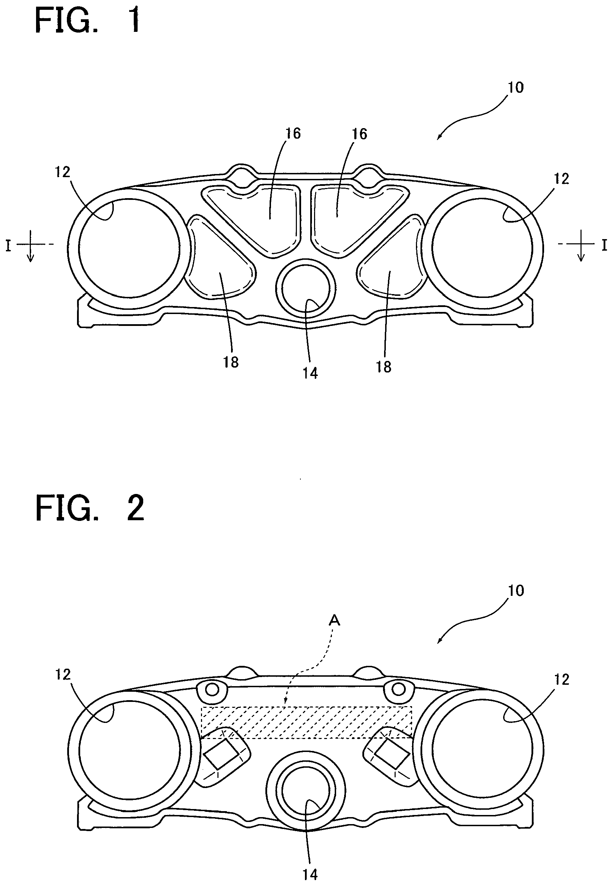

An under bracket for a two-wheel vehicle and a three-wheel vehicle (hereinafter simply referred to as an "under bracket") according to the invention has a configuration shown in Figs. 1-3, for example.

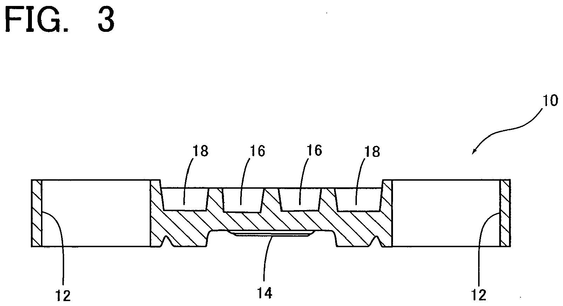

As is apparent from Figs. 1-3, the under bracket 10 is provided with: a pair of front-fork-attachment holes 12 formed in respective opposite longitudinal end portions of the under bracket 10; and a steering-shaft-insertion hole 14 formed between the pair of front-fork-attachment holes 12. Each of the front-fork-attachment holes 12 and the steering-shaft-insertion hole 14 is a through hole formed through the under bracket 10 in the vertical direction as seen in Fig. 3. Further, recesses 16, 16, 18 and 18 are formed in the vicinity of the front-fork-attachment holes 12 and the steering-shaft-insertion hole 14.

The under bracket 10 having the above-described configuration is used in the two-wheel vehicle and the three-wheel vehicle, such that a front fork extends through each of the front-fork-attachment holes 12 and a steering shaft extends through the steering-shaft-insertion hole 14.

The under bracket 10 according to the invention has major technical characteristics that it is formed of an Al alloy having a specific alloy composition, and has a microstructure in the form of a fibrous structure, and a recrystallized-structure layer formed on its surface with a thickness not larger than 0.5mm, as described below.

Significance of alloy components of the Al alloy giving the under bracket according to the invention, and reasons for determining specific contents of the respective alloy components will be explained. First, Zn (zinc) is bonded to Mg (magnesium) atoms and serves to improve the strength of the under bracket. In the present invention, the Zn content in the Al alloy is held within a range of 4.0-5.0 mass%, taking account of contents of the other components. The Zn content lower than 4.0 mass% gives rise to a risk of insufficiency of the strength of the under bracket, and the Zn content higher than 5.0 mass% gives rises to a risk of deterioration of the resistance of the under bracket to stress-corrosion-cracking (SCC resistance). In the present invention, the Zn content is preferably within a range of 4.4-5.0 mass%, and more preferably within a range of 4.5-4.9 mass%.

Mg (magnesium) is bonded to Zn atoms and serves to improve the strength of the under bracket. In the present invention, the Mg content in the Al alloy is held within a range of 1.0-2.0 mass%, taking account of the contents of the other components. The Mg content is preferably within a range of 1.0-1.3 mass%.

Cu (copper) serves to improve the resistance of the under bracket to the stress-corrosion-cracking (SCC resistance). In the present invention, the Cu content is set so as to be not higher than 0.5 mass% (and higher than 0 mass%). The Cu content higher than 0.5 mass% causes precipitation of Cu even at a temperature of about 400°C, giving rise to a risk of deterioration of the strength of the under bracket, in the case where the under bracket is produced by a process which will be described later. The Cu content is preferably set so as to be not higher than 0.20 mass% (and higher than 0 mass%).

Mn (manganese) and Zr (zirconium) serve to form a fibrous structure of a body (starting member) to be subjected to a hot forging process, by preventing recrystallization of the body during its production by an extrusion process, and also serve to improve the strength and the resistance to stress-corrosion-cracking (SCC resistance) of the under bracket, by preventing recrystallization of the body during the hot forging process. An extremely low Mn content and an extremely low Zr content cause the recrystallization of the body during its production by the extrusion process and during the hot forging process, giving rise to a risk of deterioration of the strength and the resistance to stress-corrosion-cracking (SCC resistance) of the under bracket to be obtained. On the other hand, an extremely high Mn content and an extremely high Zr content cause generation of giant compounds during the hot forging process, giving rise to a risk of deterioration of toughness of the under bracket to be obtained. Accordingly, in the present invention, the Mn content is held within a range of 0.20-0.70 mass%, and the Zr content is set so as to be 0.25 mass% or less (and more than 0 mass%). A more preferable range of the Mn content is 0.30-0.60 mass%, and a more preferable range of the Zr content is 0.10-0.25 mass%. The most preferable range of the Mn content is 0.40-0.50 mass%, and the most preferable range of the Zr content is 0.12-0.18 mass%.

The Al alloy of the under bracket according to the present invention contains the essential alloy components described above, with the balance consisting of Al and inevitable impurities. The inevitable impurities are those inevitably mixed in the Al alloy during its preparation. Specific examples of the inevitable impurities include Fe, Si and Ti. Higher contents of Fe and Si in the Al alloy lead to an increase of Al-Fe-Si constituent particles generated during the forging process, and a higher Ti content in the Al alloy leads to an increase of AI-Ti giant compounds generated during the forging process. The Al-Fe-Si constituent particles and the Al-Ti giant compounds give rise to a risk of deterioration of the toughness of the under bracket to be obtained as the end product. Accordingly, the contents of Fe, Si and Ti are preferred to be as low as possible. On the other hand, use of an Al alloy which does not contain impurities (and has a high degree of purity) results in an undesirably high cost. In the present invention, it is preferable to control the Fe content so as to be not higher than 0.40 mass%, to control the Si content so as to be not higher than 0.30 mass%, and to control the Ti content so as to be not higher than 0.10 mass%, in view of the balance between the production cost and the desired toughness of the under bracket as the end product.

The under bracket according to the present invention is formed of the Al alloy having the alloy composition including the components described above, and has the microstructure in the form of the fibrous structure, and the recrystallized-structure layer formed on its surface with the thickness not larger than 0.5mm. Where the microstructure of the under bracket is a recrystallized structure, there arises a risk of failure of the under bracket to have sufficiently high degrees of the strength and the resistance to stress-corrosion-cracking (SCC resistance). Therefore, the under bracket of the invention is configured such that its microstructure takes the form of the fibrous structure. In this respect, it is noted that in the case where the under bracket is produced by the hot forging process, the recrystallized-structure layer is inevitably formed on the surface of the under bracket. However, the under bracket of the invention is configured such that the recrystallized-structure layer has the thickness not larger than 0.5mm, so that the under bracket of the invention advantageously has the desired degrees of strength and resistance to stress-corrosion-cracking (SCC resistance). In the present invention, the thickness of the recrystallized-structure layer is preferably not larger than 0.3mm, and more preferably not larger than 0.1 mm.

The term "fibrous structure" means a metallic structure which is constituted by elongate crystal grains having large dimensions in a direction of extrusion of a material by the extrusion process, and in the inside of which subgrains having dimensions of several µm exist. The term "recrystallized-structure layer" means a metallic structure which is constituted by larger crystal grains than the fibrous structure, and formed by rearrangement (recrystallization) of atoms with a result of disappearance of the subgrains in its inside. The fibrous structure and the recrystallized structure can be clearly distinguished from each other by a microstructure observation. Namely, the thickness of the recrystallized-structure layer on the surface of the under bracket can be measured by observing the cross sectional microstructure of the surface portion of the under bracket.

The under bracket according to the present invention can be advantageously produced by a method which will be described, for example.

Initially, an extruded Al alloy body is prepared. The extruded Al alloy body is formed of an Al alloy having an alloy composition comprising: 4.0-5.0 mass% Zn; 1.0-2.0 mass% Mg; 0.50 mass% or less (and more than 0 mass%) Cu; 0.20-0.70 mass % Mn; and 0.25 mass% or less (and more than 0 mass%) Zr, with the balance consisting of Al and the inevitable impurities. The extruded Al alloy body has the microstructure in the form of the fibrous structure, and the recrystallized-structure layer formed on its surface with a thickness not larger than 0.1 mm. The extruded Al alloy body is produced by a hot extrusion process practiced at a temperature not lower than 400°C.

The extruded Al alloy body can be produced by subjecting the Al alloy having the above-described alloy composition to a known extrusion process. For instance, an ingot of the Al alloy produced by a semi-continuous casting process is subjected to a homogenizing treatment at 400-550°C for 2-20 hours, and then heated to a temperature not lower than 400°C for extrusion process, after it is cooled to the room temperature. The ingot may not be cooled after the homogenizing treatment. Then, the ingot is formed into a suitable shape by the hot extrusion process practiced at an extrusion rate of 1-20m/min as measured at the exit of the extrusion press, whereby the intended extruded Al alloy body (having the microstructure in the form of the fibrous structure, and the recrystallized-structure layer having the thickness not larger than 0.1 mm on its surface) is obtained.

Where the hot extrusion process is practiced at an extremely low temperature, recrystallization of the microstructure takes place during the hot forging process to be practiced as a subsequent step, giving rise to a risk that the under bracket obtained as the end product has the recrystallized-structure layer formed on its surface with a thickness larger than 0.5mm. Accordingly, the extruded Al alloy body used in the present invention is produced by the hot extrusion process practiced at a temperature not lower than 400°C, preferably not lower than 420°C, and more preferably not lower than 450°C.

Where the thickness of the recrystallized-structure layer formed on the surface of the extruded Al alloy body is larger than 0.1 mm, the recrystallization of the microstructure takes place during the hot forging process as the subsequent step, giving rise to a risk that the under bracket as the end product has the recrystallized-structure layer formed on its surface with a thickness larger than 0.5mm. Accordingly, the extruded Al alloy body having the recrystallized-structure layer formed on its surface with the thickness not larger than 0.1 mm is used in the present invention.

Then, the thus prepared extruded Al alloy body is subjected to the hot forging process using a metallic die having a configuration corresponding to that of the intended under bracket, under the conditions of: 1) a forging-start temperature which is set within a range of 400-480°C and such that an absolute value of a difference between the forging-start temperature and the temperature of the hot extrusion process practiced to produce the extruded Al alloy body does not exceed 20°C; and 2) a forging-termination temperature not lower than 380°C and not higher than the forging-start temperature described above.

In the method of producing the under bracket according to the present invention, the temperature (forging-start temperature) at which the hot forging process is started is set within the range of 400-480°C and such that the absolute value of the difference between the forging-start temperature and the temperature of the hot extrusion process practiced to produce the extruded Al alloy body does not exceed 20°C, since the forging-start temperature lower than 400°C gives rise to a risk of deterioration of the strength of the end product (under bracket), while the forging-start temperature higher than 480°C gives rise to a risk that the end product has the recrystallized-structure layer formed on its surface with a thickness larger than 0.5mm. Further, the thickness of the recrystallized-structure layer on the surface of the end product can be reduced by setting the forging-start temperature such that the absolute value of the difference between the forging-start temperature and the temperature of the hot extrusion process practiced to produce the extruded Al alloy body does not exceed 20°C. Where the absolute value of the difference between the forging-start temperature and the temperature of the hot extrusion process practiced to produce the extruded Al alloy body exceeds 20°C, there arises a risk that the end product has the recrystallized-structure layer formed on its surface with a thickness larger than 0.5mm, even where the forging-start temperature is within the range of 400-480°C.

The temperature (forging-termination temperature) at which the hot forging process is terminated is set so as to be not lower than 380°C and not higher than the forging-start temperature, since the forging-termination temperature lower than 380°C gives rise to a risk of deterioration of the strength of the end product (under bracket), while the forging-termination temperature higher than the forging-start temperature gives rise to a risk that the end product has the recrystallized-structure layer formed on its surface with a thickness larger than 0.5mm, and a risk that an extra process for correcting strain of a forged article is required to be practiced, since the forged article tends to be deformed at the time of its removal from the metallic die.

In the present invention, a strain rate of the extruded Al alloy body during the hot forging process varies depending on the configuration of the intended under bracket and among different portions of the under bracket to be obtained. Generally, it is preferable to control the strain rate so as to be about 1s⁻¹-10s⁻¹. An extremely small value of the strain rate results in an extremely large amount of decrease of the temperature of the extruded Al alloy body during the hot forging process, giving rise to a risk that the forging-termination temperature becomes lower than the above-indicated lower limit, leading to deterioration of the strength of the end product (under bracket). On the other hand, an extremely large value of the strain rate gives rise to a risk that the forging-termination temperature becomes higher than the above-indicated upper limit, due to heat generation in the hot forging process, and a risk of failure of the end product to have sufficiently high degrees of the strength and the resistance to stress-corrosion-cracking (SCC resistance), due to an increase of the thickness of the recrystallized-structure layer on its surface.

In the method of producing the under bracket according to the present invention, a quenching treatment of the thus obtained forged article is performed subsequent to the above-described hot forging process, by quenching the forged article to 200°C at an average cooling rate not lower than 3°C/s. Where the average cooling rate during the quenching treatment is lower than 3°C/s, there arises a risk of deterioration of the strength of the end product. In the present invention, the quenching treatment may be started at the same temperature as the above-described forging-termination temperature (not lower than 380°C and not higher than the forging-start temperature). Namely, the quenching treatment may be started right after termination of the forging process. However, in the case where the forging-termination temperature is higher than 420°C, the quenching treatment is preferably performed after cooling the forged article to a temperature not higher than 420°C. Where the quenching treatment is started at a temperature higher than 420°C, the forged article subjected to the quenching treatment suffers from a large amount of quenching strain, giving rise to a risk that a strain correcting process is required to be practiced. In the method according to the present invention, the quenching treatment is preferably started at a temperature within a range of 380-420°C.

The forged article subjected to the quenching treatment as described above is cooled from 200°C to the room temperature, at a cooling rate which is not particularly limited. The forged article cooled to the room temperature is subjected to a natural aging treatment or an artificial aging treatment, as necessary. Although conditions of the artificial aging treatment are not particularly limited, the artificial aging treatment is performed at 100-170°C for 1-50 hours, for example.

As described above, the method of producing the under bracket according to the present invention has major characteristics in that: 1) the extruded Al alloy body is used as the starting member, which has the predetermined alloy composition, the microstructure in the form of the fibrous structure, and the recrystallized-structure layer having the thickness not larger than 0.1 mm on its surface, and which is produced by the hot extrusion process at the temperature not lower than 400°C; 2) the extruded Al alloy body is subjected to the hot forging process under the predetermined conditions to obtain the forged article; and 3) the obtained forged article is subjected to the quenching treatment under the predetermined conditions. Thus, the method according to the present invention eliminates the need to perform a solution treatment and the strain correcting process, which treatment and process are essential in the conventional method of producing the under bracket by using a cast body or the like of a 6000 series Al alloy, making it possible to reduce the cost of production of the under bracket.

The thus obtained under bracket is excellent in its strength and resistance to stress-corrosion-cracking (SCC resistance), since the under bracket has the microstructure in the form of the fibrous structure, and the recrystallized-structure layer having the thickness not larger than 0.5mm on its surface. The under bracket according to the present invention is suitably employed for an on-road automotive two-wheel vehicle, in particular.

### EXAMPLES

To clarify the present invention more specifically, some examples of the invention will be described. However, it goes without saying that the invention is by no means limited to the details of the illustrated examples. It is to be understood that the invention may be embodied with various changes, modifications and improvements, which are not illustrated herein, and which may occur to those skilled in the art, without departing from the spirit of the invention.

In the examples described below, a microstructure observation, a tensile test and a SCC test were conducted by respective methods described below.

### - Microstructure Observation -

Each test article (under bracket having the configuration shown in Figs. 1-3) was cut and machined along a plane (plane of Fig. 3) perpendicular to its front to back direction (vertical direction as seen in Figs. 1 and 2), in a substantially middle part in the front to back direction, whereby the test article was exposed in the above-indicated plane. The thus exposed surfaces of the test article were polished with an emery paper unitl #800. Then, the polished surfaces were subjected to an etching treatment using a liquid mixture of a nitric acid, a hydrochloric acid and a hydrofluoric acid [nitric acid : hydrochloric acid : hydrofluoric acid = 2:6:1 (proportion by weight)]. After the etching treatment, the surfaces subjected to the etching treatment were observed by using an optical microscope (50-fold magnification) or a magnifier (10-fold magnification), to measure the thickness of the recrystallized-structure layer formed on the surface of the under bracket, and to examine presence of giant compounds having a size not smaller than 100µm within the inner structure of the under bracket.

### - Tensile Test -

A test piece having a width of 20mm and a length of 100mm was cut off from the portion A shown in Fig. 2, and the upper and lower surfaces of the test piece were faced, to obtain a tensile test piece having dimensions of 5mm in thickness, 8mm in width and 20mm in length in the reduced section. The tensile test piece was set in a tester, such that the tensile test piece was measured of its tensile strength in a direction parallel to the direction of the width of the under bracket (right to left direction as seen in Figs. 1 and 2). The tensile strength of the tensile test piece was measured by conducting the tensile test at the room temperature at a constant rate of 2mm/min.

### - SCC (Stress-Corrosion-Cracking) Test -

A test piece in the form of a C ring having an outside diameter of 58mm, a thickness of 2mm and a length of 25mm was formed from a front-fork-clamping portion (circumferential portion of the front-fork-attachment hole) of the under bracket. By tightening the test piece with a screw, a tensile stress of 95% of a proof stress of the under bracket was applied to the outer surface of the test piece. While the tensile stress was applied to the test piece, the test piece was immersed in 3.5% salt water for 10 minutes at an ambient temperature of 25°C, and then dried for 50 minutes. This cycle of immersing and drying operations was repeated until cracking of the test piece was visually observed after the drying operation. Where the cracking of the test piece was not observed after the test piece was subjected to the immersing and drying operations for 30 days, the test piece was evaluated as "free from cracking".

### - Test articles Nos. 1-14 -

There were provided 14 extruded Al alloy bodies (diameter: 45mm; length: 310mm) which were formed of alloys A to N having respective alloy compositions indicated in Table 1 given below, by a hot extrusion process practiced at 450°C. Each of the extruded Al alloy bodies has a microstructure in the form of a fibrous structure, and a recrystallized-structure layer formed on its surface with a thickness not larger than 0.1 mm. Each extruded Al alloy body was heated to 450°C (a forging-start temperature) and subjected to a hot forging process, in the diametral direction, whereby a forged article having the configuration shown in Figs. 1-3 was obtained. The obtained forged article in the form of the under bracket has the smallest thickness of 10mm and the largest thickness of 30mm. The hot forging process was practiced such that strain rates at respective different positions of the forged article range from 3s⁻¹ to 8s⁻¹, and a temperature (forging-termination temperature) of the forged article after termination of the forging process is within a range of 400-410°C. After the hot forging process, it was confirmed that the temperature of the forged article was within a range of 390-410°C, and a quenching treatment was immediately performed by cooling the forged article to 200°C within 60 seconds by using a fan. After the forged article was cooled to 200°C, blowing of the air to the forged article with the fan was terminated, and the forged article was left until it was cooled to the room temperature.

After the forged article cooled to the room temperature was subjected to a natural aging treatment for two days, the forged article was heated to 100°C at a rate of about 50°C/h, and kept at this temperature for three hours, and subsequently heated to 150°C at a rate of about 50°C/h, and kept at this temperature for eight hours. Then, the forged article was left at the room temperature and cooled, whereby each of the under brackets (test articles Nos. 1-14) having the configuration shown in Figs. 1-3 was obtained. Each of the thus obtained test articles was subjected to the microstructure observation, the tensile test and the SCC (stress-corrosion-cracking) test. Results of the observation and tests are indicated in Table 2 given below.

**Table 1**

| Alloy | Composition | | | | | | | |
|---|---|---|---|---|---|---|---|---|
| | Zn | Mg | Cu | Mn | Zr | Fe | Si | Ti |
| A | 4.0 | 1.0 | 0.18 | 0.45 | 0.15 | 0.18 | 0.14 | 0.02 |
| B | 4.4 | 1.0 | 0.15 | 0.42 | 0.14 | 0.15 | 0.12 | 0.02 |
| C | 4.5 | 1.1 | 0.16 | 0.44 | 0.14 | 0.17 | 0.13 | 0.01 |
| D | 4.7 | 1.2 | 0.11 | 0.49 | 0.15 | 0.15 | 0.13 | 0.02 |
| E | 4.9 | 1.3 | 0.17 | 0.42 | 0.17 | 0.16 | 0.13 | 0.02 |
| F | 5.0 | 2.0 | 0.19 | 0.40 | 0.14 | 0.14 | 0.11 | 0.01 |
| G | 4.6 | 1.3 | 0.45 | 0.48 | 0.18 | 0.16 | 0.15 | 0.02 |
| H | 4.5 | 1.0 | 0.17 | 0.21 | 0.24 | 0.10 | 0.07 | 0.02 |
| I | 4.5 | 1.1 | 0.15 | 0.32 | 0.19 | 0.12 | 0.09 | 0.01 |
| J | 4.6 | 1.0 | 0.15 | 0.59 | 0.10 | 0.14 | 0.10 | 0.02 |
| K | 4.7 | 1.2 | 0.14 | 0.68 | 0.08 | 0.18 | 0.17 | 0.02 |
| L | 4.6 | 1.2 | 0.13 | 0.45 | 0.14 | 0.38 | 0.07 | 0.01 |
| M | 4.8 | 1.1 | 0.16 | 0.44 | 0.15 | 0.11 | 0.28 | 0.02 |
| N | 4.8 | 1.2 | 0.14 | 0.42 | 0.13 | 0.15 | 0.11 | 0.09 |

**Table 2**

| | Alloy | Thickness (mm) of recrystallized-structure layer on surface of test article | Presence of giant compounds | Tensile strength (MPa) | Number of days passed until cracking of test piece was observed in SCC test |
|---|---|---|---|---|---|
| Test article No. 1 | A | 0.03 | Absent | 350 | Free from cracking |
| Test article No. 2 | B | 0.04 | Absent | 387 | Free from cracking |
| Test article No. 3 | C | 0.04 | Absent | 407 | Free from cracking |
| Test article No. 4 | D | 0.03 | Absent | 431 | Free from cracking |
| Test article No. 5 | E | 0.02 | Absent | 455 | Free from cracking |
| Test article No. 6 | F | 0.04 | Absent | 498 | Free from cracking |
| Test article No. 7 | G | 0.01 | Absent | 425 | Free from cracking |
| Test article No. 8 | H | 0.01 | Absent | 399 | Free from cracking |
| Test article No. 9 | I | 0.02 | Absent | 402 | Free from cracking |
| Test article No. 10 | J | 0.04 | Absent | 406 | Free from cracking |
| Test article No. 11 | K | 0.04 | Absent | 434 | Free from cracking |
| Test article No. 12 | L | 0.04 | Absent | 423 | Free from cracking |
| Test article No. 13 | M | 0.03 | Absent | 436 | Free from cracking |
| Test article No. 14 | N | 0.04 | Absent | 439 | Free from cracking |

As apparent from the results indicated in Table 2, it was recognized that each of the under brackets (test articles Nos. 1-14) according to the present invention has an excellent tensile strength and an excellent SCC resistance (resistance to stress-corrosion-cracking) in the absence of its cracking in the SCC (stress-corrosion-cracking) test.

### - Test articles Nos. 15-18 -

There were provided extruded Al alloy bodies (diameter: 45mm; length: 310mm) which were formed of the alloy D indicated in Table 1, by hot extrusion processes practiced at respective different temperatures indicated in Table 3 given below. Each of the extruded Al alloy bodies has a microstructure in the form of a fibrous structure, and a recrystallized-structure layer formed on its surface with a thickness not larger than 0.1mm. By using the extruded Al alloy bodies, forged articles having the configuration shown in Figs. 1-3 were formed by hot forging processes practiced under respective different conditions indicated in Table 3. Each of the thus obtained forged articles in the form of the under bracket has the smallest thickness of 10mm and the largest thickness of 30mm. The forged articles were quenched from respective temperatures of quenching indicated in Table 3 to 200°C at respective average cooling rates. After the forged articles were cooled to 200°C, the forged articles were left at the room temperature and cooled to the room temperature. In this respect, it is noted that quenching treatments were performed by cooling the test articles Nos. 15-17 with an air blow by using a fan, and cooling the test article No. 18 with water.

After each of the forged articles cooled to the room temperature was subjected to a natural aging treatment for two days, the forged article was heated to 100°C at a rate of about 50°C/h, and kept at this temperature for three hours, and subsequently heated to 150°C at a rate of about 50°C/h, and kept at this temperature for eight hours. Then, the forged article was left at the room temperature and cooled, whereby each of the under brackets (test articles Nos. 15-18) having the configuration shown in Figs. 1-3 was obtained. Each of the thus obtained test articles was subjected to the microstructure observation, the tensile test and the SCC (stress-corrosion-cracking) test. Results of the observation and tests are indicated in Table 4 given below.

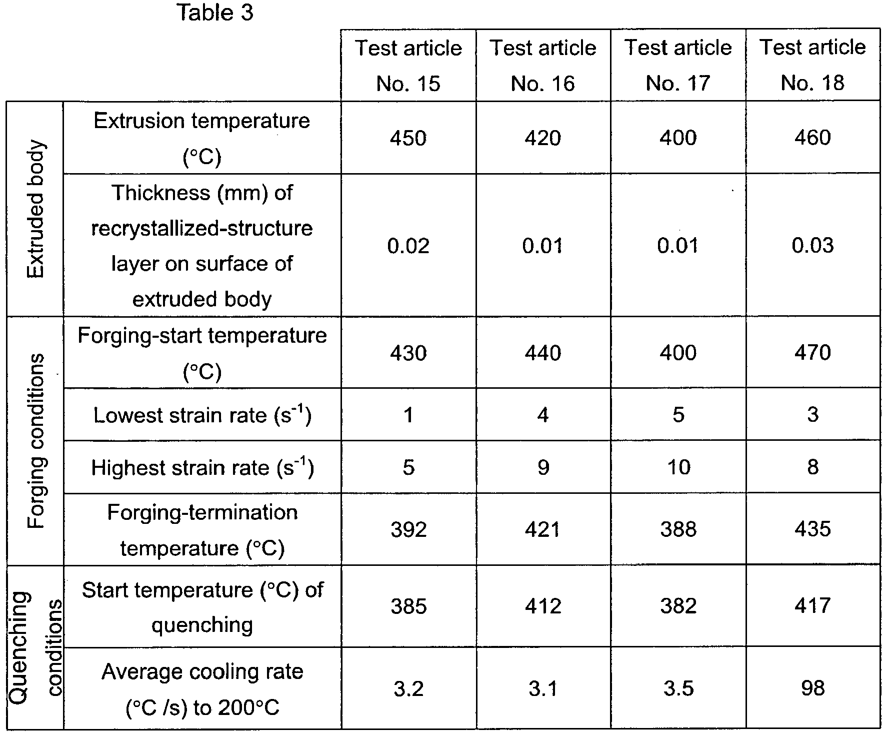

**Table 4**

| | Test article No. 15 | Test article No. 16 | Test article No. 17 | Test article No. 18 |
|---|---|---|---|---|
| Thickness (mm) of recrystallized-structure layer on surface of test article | 0.05 | 0.10 | 0.17 | 0.27 |
| Presence of giant compounds | Absent | Absent | Absent | Absent |
| Tensile strength (MPa) | 432 | 435 | 428 | 437 |
| Number of days passed until cracking of test piece was observed in SCC test | Free from cracking | Free from cracking | Free from cracking | Free from cracking |

As apparent from the results indicated in Table 4, it was recognized that each of the under brackets (test articles Nos. 15-18) according to the present invention has an excellent tensile strength and an excellent SCC resistance (resistance to stress-corrosion-cracking) in the absence of its cracking in the SCC (stress-corrosion-cracking) test. It goes without saying that a process for correcting strain of the test articles Nos. 15-18 was not necessary, since the start temperatures of quenching of these test articles are lower than their respective forging-start temperatures.

### - Test articles Nos. 19-26 -

Under brackets (test articles Nos. 19-26) having the configuration shown in Figs. 1-3 were obtained under the same conditions as in the production of the test articles Nos. 1-14, except that the test articles Nos. 19-26 were produced by using extruded Al alloy bodies (diameter: 45mm; length: 310mm) which were formed of alloys aa to hh having respective alloy compositions indicated in Table 5 given below. Each of the extruded Al alloy bodies has a microstructure in the form of a fibrous structure, and a recrystallized-structure layer formed on its surface with a thickness not larger than 0.1 mm. Each of the thus obtained test articles was subjected to the microstructure observation, the tensile test and the SCC (stress-corrosion-cracking) test. Results of the observation and tests are indicated in Table 6 given below.

**Table 5**

| Alloy | Composition | | | | | | | |
|---|---|---|---|---|---|---|---|---|
| | Zn | Mg | Cu | Mn | Zr | Fe | Si | Ti |
| aa | 3.5 | 0.8 | 0.16 | 0.46 | 0.15 | 0.20 | 0.15 | 0.02 |
| bb | 5.4 | 2.3 | 0.14 | 0.46 | 0.14 | 0.18 | 0.14 | 0.02 |
| cc | 4.6 | 1.2 | 0.00 | 0.45 | 0.13 | 0.14 | 0.09 | 0.02 |
| dd | 4.5 | 1.1 | 0.58 | 0.44 | 0.15 | 0.19 | 0.14 | 0.03 |
| ee | 4.8 | 1.2 | 0.15 | 0.12 | 0.08 | 0.18 | 0.16 | 0.02 |
| ff | 4.7 | 1.2 | 0.13 | 0.82 | 0.21 | 0.17 | 0.14 | 0.03 |
| gg | 4.8 | 1.2 | 0.15 | 0.45 | 0.14 | 0.55 | 0.37 | 0.01 |
| hh | 4.7 | 1.2 | 0.16 | 0.46 | 0.16 | 0.17 | 0.14 | 0.13 |

**Table 6**

| | Alloy | Thickness (mm) of recrystallized-structure layer on surface of test article | Presence of giant compounds | Tensile strength (MPa) | Number of days passed until cracking of test piece was observed in SCC test |
|---|---|---|---|---|---|
| Test article No. 19 | aa | 0.03 | Absent | 258 | Free from cracking |
| Test article No. 20 | bb | 0.03 | Absent | 532 | 25 |
| Test article No. 21 | cc | 0.04 | Absent | 417 | 29 |
| Test article No. 22 | dd | 0.03 | Absent | 336 | Free from cracking |
| Test article No. 23 | ee | 0.56 | Absent | 346 | 28 |
| Test article No. 24 | ff | 0.02 | Present | 431 | Free from cracking |
| Test article No. 25 | gg | 0.04 | Present | 444 | Free from cracking |
| Test article No. 26 | hh | 0.02 | Present | 432 | Free from cracking |

As apparent from the results indicated in Table 6, it was recognized that the test article No. 19 formed of the Al alloy containing Zn and Mg in amounts smaller than the respective lower limits defined according to the present invention has a low tensile strength. In the test article No. 20 formed of the Al alloy containing Zn and Mg in amounts larger than the respective upper limits defined according to the present invention, cracking was observed in the SCC (stress-corrosion-cracking) test, and it was confirmed that the SCC resistance (resistance to stress-corrosion-cracking) of the test article No. 20 is insufficient. In the test article No. 21 formed of the Al alloy which does not contain Cu, cracking was observed in the SCC (stress-corrosion-cracking) test, and it was confirmed that the SCC resistance (resistance to stress-corrosion-cracking) of the test article No. 21 is insufficient. It was recognized that the test article No. 22 formed of the Al alloy containing Cu in an amount larger than the upper limit defined according to the present invention has a low tensile strength. In the test article No. 23 formed of the Al alloy containing Mn in an amount smaller than the lower limit defined according to the present invention, the thickness of the recrystallized-structure layer formed on its surface exceeds the upper limit of the range defined according to the invention, and it was confirmed that the test article No. 23 has a low tensile strength and an insufficient SCC resistance (resistance to stress-corrosion-cracking). In the test article No. 24 formed of the Al alloy containing Mn in an amount larger than the upper limit defined according to the present invention, generation of giant compounds having a size larger than 100µm was recognized. Generation of the giant compounds having a size larger than 100µm was also recognized in the test article No. 25 formed of the Al alloy containing relatively large amounts of Fe and Si as impurities, and in the test article No. 26 containing a relatively large amount of Ti as an impurity.

### - Test articles Nos. 27-35 -

There were provided extruded Al alloy bodies (diameter: 45mm; length: 310mm) which were formed of the alloy D indicated in Table 1, by hot extrusion processes practiced at respective different temperatures indicated in Table 7 given below. Each of the extruded Al alloy bodies has a microstructure in the form of a fibrous structure, and a recrystallized-structure layer formed on its surface with a thickness not larger than 0.1 mm. By using the extruded Al alloy bodies, forged articles having the configuration shown in Figs. 1-3 were formed by hot forging processes practiced under respective different conditions indicated in Table 7. Each of the thus obtained forged articles in the form of the under bracket has the smallest thickness of 10mm and the largest thickness of 30mm. The forged articles were quenched from respective start temperatures of quenching indicated in Table 7 to 200°C at respective average cooling rates. After the forged articles were quenched to 200°C, the forged articles were left at the room temperature and cooled to the room temperature. In this respect, it is noted that quenching treatments were performed by cooling the test articles Nos. 27-34 with an air blow by using a fan, and leaving the test article No. 35 in the ambient air (at the room temperature).

After each of the forged articles cooled to the room temperature was subjected to a natural aging treatment for two days, the forged article was heated to 100°C at a rate of about 50°C/h, and kept at this temperature for three hours, and subsequently heated to 150°C at a rate of about 50°C/h, and kept at this temperature for eight hours. Then, the forged article was left at the room temperature and cooled, whereby each of the under brackets (test articles Nos. 27-35) having the configuration shown in Figs. 1-3 was obtained. Each of the thus obtained test articles was subjected to the microstructure observation, the tensile test and the SCC (stress-corrosion-cracking) test. Results of the observation and tests are indicated in Table 8 given below.

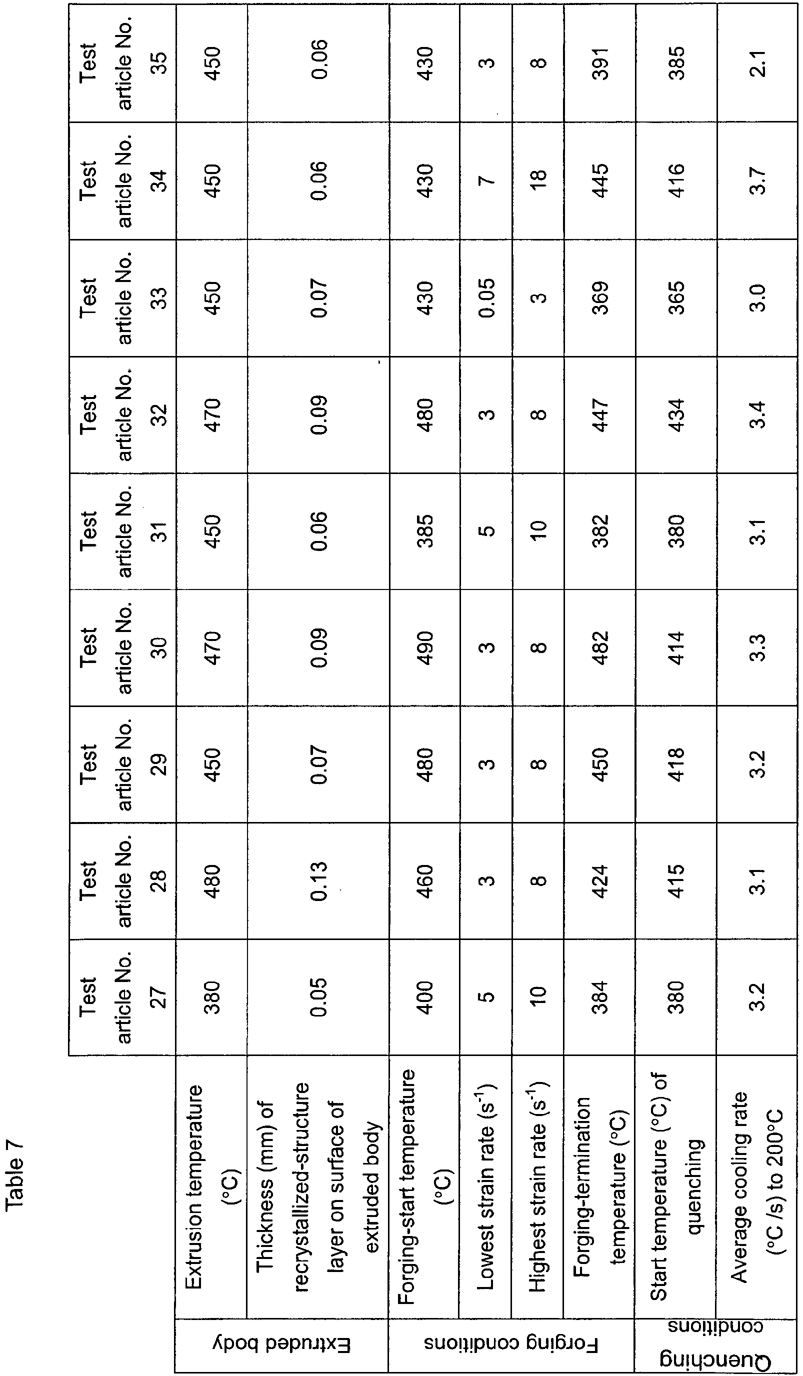

**Table 8**

| | Test article No. 27 | Test article No. 28 | Test article No. 29 | Test article No. 30 | Test article No. 31 | Test article No. 32 | Test article No. 33 | Test article No. 34 | Test article No. 35 |
|---|---|---|---|---|---|---|---|---|---|
| Thickness (mm) of recrystallized-structure layer on surface of test article | 12 | 8 | 3 | 9 | 0.42 | 0.48 | 0.22 | 9 | 0.08 |
| Presence of giant compounds | Absent | Absent | Absent | Absent | Absent | Absent | Absent | Absent | Absent |
| Tensile strength (MPa) | 321 | 333 | 345 | 328 | 335 | 416 | 335 | 325 | 338 |
| Number of days passed until cracking of test piece was observed in SCC test | 21 | 25 | 29 | 24 | Free from cracking | Free from cracking | Free from cracking | 23 | Free from cracking |

As apparent from Tables 7 and 8, it was recognized that the test article No. 27 produced by using the extruded body produced at an extrusion temperature lower than the lower limit defined according to the present invention has a recrystallized-structure layer formed on its surface with a thickness larger than 0.5mm, and a low tensile strength and an insufficient SCC resistance (resistance to stress-corrosion-cracking). It was confirmed that the test article No. 28 produced by using the extruded body having a recrystallized-structure layer formed on its surface with a thickness larger than the upper limit defined according to the present invention has the recrystallized-structure layer formed on its surface with a thickness larger than 0.5mm, and a low tensile strength and an insufficient SCC resistance (resistance to stress-corrosion-cracking). It was recognized that the under bracket of the test article No. 29 has a low tensile strength and an insufficient SCC resistance (resistance to stress-corrosion-cracking). In production of the test article No. 29, an absolute value of a difference between the forging-start temperature and the extrusion temperature during production of the extruded body exceeds 20°C. It was recognized that the under bracket of the test article No. 30 has a low tensile strength and an insufficient SCC resistance (resistance to stress-corrosion-cracking). In production of the test article No. 30, the forging-start temperature is higher than the upper limit defined according to the present invention. It was recognized that the under bracket of the test article No. 31 has a low tensile strength. In production of the test article No. 31, the forging-start temperature is lower than the lower limit defined according to the present invention. It was recognized that the under bracket of the test article No. 32 suffered from a large amount of quenching strain, due to a relatively high quenching start temperature, so that an extra process for correcting the strain was required. It was recognized that the under bracket of the test article No. 33 has a low tensile strength, due to relatively low strain rates during the hot forging process. It was recognized that the under bracket of the test article No. 34 has a recrystallized-structure layer formed on its surface with a thickness larger than 0.5mm, a low tensile strength and an insufficient SCC resistance (resistance to stress-corrosion-cracking), due to relatively high strain rates during the hot forging process. It was recognized that the under bracket of the test article No. 35 has a low tensile strength, since the test article No. 35 was cooled in the quenching treatment to 200°C at an average cooling rate lower than the lower limit defined according to the present invention.

### NOMENCLATURE OF REFERENCE SINGS

| | |
|---|---|
| 10: Under Bracket | 12: Front-fork Attachment Hole |
| 14: Steering-shaft Insertion Hole | |
| 16: Recess | 18: Recess |

## Claims

1. An under bracket for a two-wheel vehicle and a three-wheel vehicle, which is formed of an Al alloy having an alloy composition comprising 4.0-5.0 mass% Zn, 1.0-2.0 mass% Mg, 0.50 mass% or less (and more than 0 mass%) Cu, 0.20-0.70 mass% Mn, and 0.25 mass% or less (and more than 0 mass%) Zr, with the balance consisting of Al and inevitable impurities, the under bracket having a microstructure in the form of a fibrous structure, and a recrystallized-structure layer formed on its surface with a thickness not larger than 0.5mm.

2. A method of producing the under bracket for the two-wheel vehicle and the three-wheel vehicle, as defined in claim 1, comprising the steps of:
preparing an extruded Al alloy body by a hot extrusion process practiced at an extrusion temperature not lower than 400°C, by using an Al alloy having an alloy composition comprising 4.0-5.0 mass% Zn, 1.0-2.0 mass% Mg, 0.50 mass% or less (and more than 0 mass%) Cu, 0.20-0.70 mass% Mn, and 0.25 mass% or less (and more than 0 mass%) Zr, with the balance consisting of Al and inevitable impurities, the extruded Al alloy body having a microstructure in the form of a fibrous structure, and a recrystallized-structure layer formed on its surface with a thickness not larger than 0.1mm;
subjecting the extruded Al alloy body to a hot forging process under conditions of: a forging-start temperature which is set within a range of 400-480°C and such that an absolute value of a difference between the forging-start temperature and the extrusion temperature does not exceed 20°C; and a forging-termination temperature not lower than 380°C and not higher than the forging-start temperature, thereby forming the extruded Al alloy body into a forged article having a predetermined configuration; and
subsequently to the hot forging process, performing a quenching treatment of the forged article obtained by the hot forging process, by quenching the forged article to 200°C at an average cooling rate not lower than 3°C/s.

## Patentansprüche

1. Unterkonsole für ein Zweiradfahrzeug und ein Dreiradfahrzeug, welche aus einer AI-Legierung mit einer Legierungszusammensetzung, umfassend 4,0-5,0 Masse-% Zn, 1,0-2,0 Masse-% Mg, 0,50 Masse-% oder weniger (und mehr als 0 Masse-%) Cu, 0,20-0,70 Masse-% Mn und 0,25 Masse-% oder weniger (und mehr als 0 Masse-%) Zr, wobei der Rest aus Al und unvermeidbaren Verunreinigungen besteht, gebildet ist, wobei die Unterkonsole eine Mikrostruktur in der Form einer faserartigen Struktur und eine Schicht einer umkristallisierten Struktur, gebildet auf deren Oberfläche, mit einer Dicke von nicht größer als 0,5 mm aufweist.

2. Verfahren zur Herstellung der Unterkonsole für das Zweiradfahrzeug und das Dreiradfahrzeug, wie in Anspruch 1 definiert, umfassend die Schritte:
das Herstellen eines extrudierten AI-Legierungskörpers durch ein Heißextrusionsverfahren, ausgeführt bei einer Extrusionstemperatur von nicht weniger als 400°C unter Verwendung einer AI-Legierung mit einer Legierungszusammensetzung, umfassend 4,0-5,0 Masse-% Zn, 1,0-2,0 Masse-% Mg, 0,50 Masse-% oder weniger (und mehr als 0 Masse-%) Cu, 0,20-0,70 Masse-% Mn und 0,25 Masse-% oder weniger (und mehr als 0 Masse-%) Zr, wobei der Rest aus Al und unvermeidbaren Verunreinigungen besteht, wobei der extrudierte AI-Legierungskörper eine Mikrostruktur in der Form einer faserartigen Struktur und eine Schicht einer umkristallisierten Struktur, gebildet auf deren Oberfläche, mit einer Dicke von nicht größer als 0,1 mm aufweist,
das Unterwerfen des extrudierten AI-Legierungskörpers einem Heißschmiedeverfahren unter Bedingungen von: einer Schmiedeanfangstemperatur, welche innerhalb eines Bereichs von 400-480°C eingestellt wird und derart, daß ein absoluter Wert eines Unterschieds zwischen der Schmiedeanfangstemperatur und der Extrusionstemperatur 20°C nicht übersteigt, und einer Schmiedeabschlußtemperatur von nicht weniger als 380°C und nicht höher als der Schmiedeanfangstemperatur, wodurch der extrudierte AI-Legierungskörper in einen geschmiedeten Gegenstand mit einer vorbestimmten Konfiguration gebildet wird, und
nachfolgend dem Heißschmiedeverfahren das Durchführen einer Quenchbehandlung des geschmiedeten Gegenstands, erhalten durch das Heißschmiedeverfahren, durch Quenchen des geschmiedeten Gegenstands bei 200°C mit einer durchschnittlichen Abkühlgeschwindigkeit von nicht weniger als 3°C/s.

## Revendications

1. Armature inférieure pour véhicule à deux roues et véhicule à trois roues, formée d'un alliage d'Al ayant une composition d'alliage comprenant 4,0-5,0% en masse de Zn, 1,0-2,0% en masse de Mg, 0,50% en masse ou moins (et plus de 0% en masse) de Cu, 0,20-0,70% en masse de Mn, et 0,25% en masse ou moins (et plus de 0% en masse) de Zr, le reste consistant en Al et d'inévitables impuretés, l'armature inférieure ayant une microstructure sous forme d'une structure fibreuse, et une couche de structure recristallisée formée sur sa surface ayant une épaisseur non supérieure à 0,5 mm.

2. Procédé de production de l'armature inférieure pour véhicule à deux roues et véhicule à trois roues, telle que définie à la revendication 1, comprenant les étapes de :
préparation d'un corps extrudé en alliage d'Al par un procédé d'extrusion à chaud effectué à une température d'extrusion non inférieure à 400°C, en utilisant un alliage d'Al ayant une composition d'alliage comprenant 4,0-5,0% en masse de Zn, 1,0-2,0% en masse de Mg, 0,50% en masse ou moins (et plus de 0% en masse) de Cu, 0,20-0,70% en masse de Mn, et 0,25% en masse ou moins (et plus de 0% en masse) de Zr, le reste consistant en Al et d'inévitables impuretés, le corps extrudé en alliage d'Al ayant une microstructure sous forme d'une structure fibreuse, et une couche de structure recristallisée formée sur sa surface ayant une épaisseur non supérieure à 0,1 mm ;
soumission sur le corps extrudé en alliage d'Al à un procédé de forgeage à chaud dans les conditions suivantes : une température de début du forgeage, réglée dans la plage allant de 400 à 480°C et telle que la valeur absolue de la différence entre la température de début du forgeage et la température d'extrusion ne dépasse pas 20°C ; et une température de fin de forgeage non inférieure à 380°C et non supérieure à la température de début de forgeage, pour ainsi former à partir du corps extrudé en alliage d'Al, un article forgé ayant une configuration prédéterminée, et
suite au procédé de forgeage à chaud, réalisation d'un traitement de trempe de l'article forgé obtenu par le procédé de forgeage à chaud, par trempe de l'article forgé à 200°C à une vitesse moyenne de refroidissement non inférieure à 3°C/seconde.
